(19) **Europäisches Patentamt / European Patent Office / Office européen des brevets**

(11) **EP 4 592 891 A1**

(12) **EUROPEAN PATENT APPLICATION**
published in accordance with Art. 153(4) EPC

(43) Date of publication:
**30.07.2025 Bulletin 2025/31**

(21) Application number: **23867940.1**

(22) Date of filing: **21.08.2023**

(51) International Patent Classification (IPC):
**G06K 19/07** (2006.01)    **G06F 16/11** (2019.01)
**G06K 7/10** (2006.01)

(52) Cooperative Patent Classification (CPC):
**G06F 16/11; G06K 7/10; G06K 19/07; G06K 19/073**

(86) International application number:
**PCT/JP2023/029931**

(87) International publication number:
**WO 2024/062816 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.09.2022 JP 2022149491**

(71) Applicants:
• **Kabushiki Kaisha Toshiba**
**Tokyo 105-0023 (JP)**

• **TOSHIBA INFRASTRUCTURE SYSTEMS & SOLUTIONS CORPORATION**
**Saiwai-ku**
**Kawasaki-shi**
**Kanagawa 212-0013 (JP)**

(72) Inventor: **KURIYAMA, Ryouichi**
**Kawasaki-shi, Kanagawa 210-0007 (JP)**

(74) Representative: **HKW Intellectual Property PartG mbB**
**Theresienhöhe 12**
**80339 München (DE)**

(54) **MOBILE ELECTRONIC DEVICE, CONTROL METHOD FOR SAME, AND RECORDING MEDIUM**

(57) A portable electronic device of an embodiment includes a storage unit capable of storing a record in an activated state (Activate) and a record in a deactivated state (Deactivate); a search unit that searches for, based on a search command input from an external device, a record corresponding to the search command from the records stored in the storage unit by including the record in the deactivated state (Deactivate) in a search target; and a search result output unit that outputs a search result corresponding to the record searched by the search unit to the external device. Therefore, it is possible to perform searching by including a record as a search target in the search target even when the record is in a deactivated state.

FIG.2

EP 4 592 891 A1

**Description**

FIELD

Embodiments of the present invention relate to a portable electronic device, a control method for the portable electronic device, and a recording medium.

BACKGROUND

A conventional portable electronic device such as an IC card manages a plurality of files stored in a memory in a hierarchical structure.

When a record included in a file of the portable electronic device is searched, the search is performed from a plurality of elementary files (EFs) or a designated single EF under the control of an application.

CITATION LIST

Patent Literature

Patent Literature 1: JP2006-072924A

SUMMARY OF THE INVENTION

Problem to be Solved by the Invention

However, when the record as a search target is included in the EF in a deactivated state (Deactivate), or when the record itself as a search target is in a deactivated state (Deactivate), the record is not set as the search target.

For this reason, even when a target record is searched from the entire record data, not only a desired record cannot be searched but also it cannot be determined whether or not the record is included.

The present invention has been made in view of the above, and an object of the present invention is to provide a portable electronic device, a control method for the portable electronic device, and a recording medium, which enable searching by including a record as a search target in the search target even when the record is in a deactivated state.

Means for Solving Problem

A portable electronic device according to an embodiment includes: a storage unit configured to be able to store a record in an activated state (Activate) and a record in a deactivated state (Deactivate); a search unit configured to search for, based on a search command input from an external device, a record corresponding to the search command from the records stored in the storage unit by including the record in the deactivated state (Deactivate) in a search target; and a search result output unit configured to output a search result corresponding to the record searched by the search unit to the external device.

BRIEF DESCRIPTION OF DRAWINGS

FIG. 1 is a schematic configuration block diagram of an information processing system including a portable electronic device according to an embodiment.
FIG. 2 is a schematic configuration block diagram of a portable electronic device.
FIG. 3 is an explanatory diagram of a data structure example.
FIG. 4 is a data format of a search command.
FIG. 5 is an explanatory diagram of a command parameter.
FIG. 6 is an explanatory diagram of an example of an EF as a search target.
FIG. 7 is a main flowchart at the time of a command input of the portable electronic device according to the embodiment.
FIG. 8 is a processing flowchart of simple search processing.
FIG. 9A is an explanatory diagram of an example of a plurality of EFs.
FIG. 9B is an explanatory diagram of an example of a plurality of EFs.
FIG. 9C is an explanatory diagram of an example of a plurality of EFs.

FIG. 10 is a data format of a search command used in multiple EF search processing.

FIG. 11 is a processing flowchart (part 1) of the multiple EF search processing.

FIG. 12 is a processing flowchart (part 2) of the multiple EF search processing.

DETAILED DESCRIPTION

Next, preferred embodiments will be described with reference to the drawings.

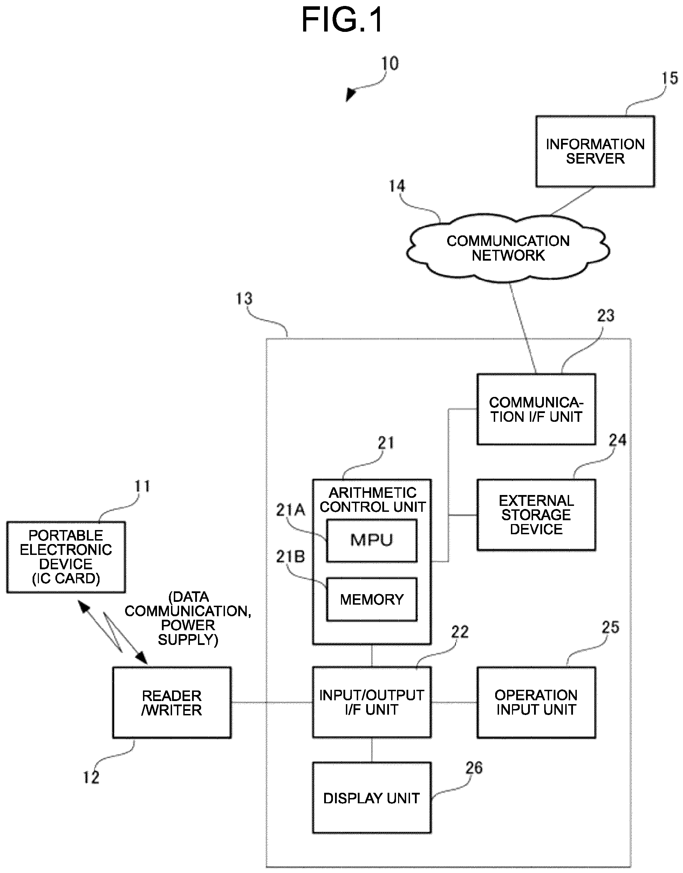

FIG. 1 is a schematic configuration block diagram of an information processing system including a portable electronic device according to an embodiment.

An information processing system 10 includes a portable electronic device 11, a reader/writer 12, an information processing device 13, a communication network 14, and an information server 15.

The portable electronic device 11 is configured as, for example, an IC card, a USB memory, a solid state drive (SSD), or the like. In the following description, for easy understanding, a case where the portable electronic device 11 is configured as an IC card will be described as an example.

The reader/writer 12 (external device) can wirelessly communicate with the portable electronic device 11 configured as an IC card, and wirelessly supplies power serving as a drive power source of the portable electronic device 11 to the portable electronic device 11.

The information processing device 13 is configured as a so-called computer, and in the present embodiment, functions as a search apparatus that searches for data stored in the portable electronic device 11.

The communication network 14 is configured as, for example, the Internet or the like, and communicably connects the information processing device 13 and the information server 15.

The information server 15 communicates with the information processing device 13 to collect various kinds of data and provide various kinds of data.

Next, a configuration of the information processing device 13 will be described.

As illustrated in FIG. 1, the information processing device 13 includes an arithmetic control unit 21, an input/output interface (I/F) unit 22, a communication interface (I/F) unit 23, an external storage device 24, an operation input unit 25, and a display unit 26.

The arithmetic control unit 21 includes an MPU 21A that performs various kinds of arithmetic processing and overall control of information processing, and a memory 21B that stores various kinds of data. In this case, the memory 21B includes at least a ROM and a RAM, and includes a non-volatile memory (for example, EEPROM, flash memory, and the like) as necessary.

The input/output interface (I/F) unit 22 includes an input interface corresponding to an input device such as a mouse or a keyboard, a display device such as a display as the display unit 26, and an output interface corresponding to an output device such as a printer (not illustrated).

The communication interface (I/F) unit 23 includes a communication interface such as Ethernet, WiFi, or Bluetooth (registered trademark).

The external storage device 24 is configured as a hard disk drive (HDD), an SSD, or the like, and stores various kinds of data.

The operation input unit 25 is configured as a mouse, a keyboard, or the like.

The display unit 26 is configured as a display device such as a liquid crystal display or an organic EL display.

Next, a configuration example of the portable electronic device 11 will be described.

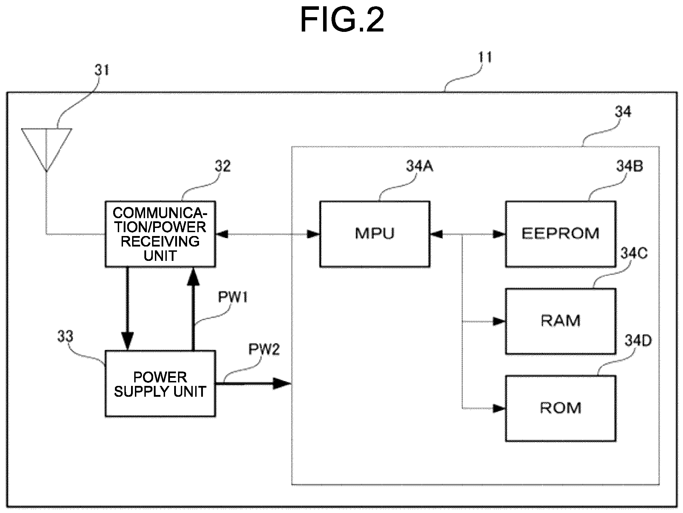

FIG. 2 is a schematic configuration block diagram of the portable electronic device.

The portable electronic device 11 includes an antenna 31, a communication/power receiving unit 32, a power supply unit 33, and a controller 34.

The antenna 31 is configured as an antenna coil, receives the modulated wave transmitted from the reader/writer 12, and transmits the modulated wave to the reader/writer 12 under the control of the controller 34.

The communication/power receiving unit 32 communicates with the reader/writer 12, and supplies the modulated wave received from the reader/writer to the power supply unit 33 as a power signal.

The power supply unit 33 performs AC/DC conversion of the power signal, and supplies the power signal as an operation power supply PW1 of the communication/power receiving unit 32 and an operation power supply PW2 of the controller 34.

The controller 34 includes an MPU 34A, an EEPROM 34B, a RAM 34C, and a ROM 34D.

In the above configuration, the EEPROM 34B functions as a storage unit capable of storing a record in an activated state (Activate) and a record in a deactivated state (Deactivate), the MPU 34A functions as a search unit that allows the record in the deactivated state (Deactivate) to be included in the search target on the basis of the input search command, and the antenna 31, the communication/power receiving unit 32, and the controller 34 function as a search result output unit that cooperatively outputs a search result corresponding to the record in the deactivated state (Deactivate) as a search result.

The MPU 34A is configured as a so-called microcomputer, performs various kinds of arithmetic processing including data search processing to be described later, and controls the entire controller 34.

The EEPROM 34B functions as a data memory, and is used in a case where it is necessary to update and nonvolatilely store various kinds of data such as application data.

The RAM 34C is used as a working area for temporarily holding processing data when the MPU 34A performs processing.

The ROM 34D is used to store a basic control program, various kinds of control data, and the like of the MPU 34A.

Next, a data structure example of the embodiment will be described.

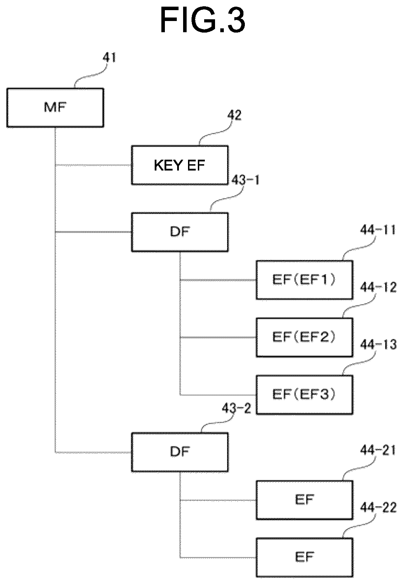

FIG. 3 is an explanatory diagram of the data structure example.

The EEPROM 34B functioning as a data memory stores, for example, various kinds of data such as application data in a predetermined file management structure. This file structure is, for example, a tree structure of directories having various types of folders on the basis of ISO/IEC7816-4 which is one of IC card standards.

More specifically, the file stored in the EEPROM 34B functioning as a data memory is defined as any of a master file (MF), a dedicated file (DF), and an elementary file (EF).

The MF corresponds to a so-called root directory. In the lower hierarchy of the MF, the DF and the EF are defined.

The DF corresponds to a directory and functions as a folder. The DF and the EF can be defined and provided in a lower hierarchy of one DF.

By adopting such a configuration, in the portable electronic device 11 configured as an IC card, it is possible to manage files in a hierarchical structure with the MF as the highest hierarchy. The MF, the DF, and the EF are selectively used.

In the example of FIG. 3, an MF 41 is provided in the uppermost hierarchy.

Then, a key EF 42 used to store a key for establishing an access right, and DFs 43-1 and 43-2 as folders set for each application are provided in the next lower hierarchy of the MF 41.

Furthermore, in the lower hierarchy of the DF 43-1 corresponding to a first application, EFs 44-11 to 44-13 used to store user data used in the first application are provided.

In the lower hierarchy of the DF 43-2 corresponding to a second application, EFs 44-21 and 44-22 used to store user data used in the second application are provided.

Note that the DF is provided as many as the number of applications mounted on the portable electronic device 11 configured as an IC card.

Before the data search processing is described next, problems to be solved by the embodiment will be described.

As a first assumed case, in a passport (so-called ePassport) including an IC card, it is conceivable to store visa data as a record.

However, since the visa has an expiration date, the record of the expired visa becomes in a deactivated state (Deactivate), and only the valid visa is in an activated state (Activate).

Therefore, in a case where it is necessary to refer to or check the record of the visa that has been acquired in the past and of which the expiration date has expired, it is necessary to set all the records of the visa to the activated state (Activate). However, it is necessary to separately check which record of the visa is valid with reference to the expiration date data.

As a second assumed case, in a passport provided with an IC card, it is assumed that an examination of an infectious disease and a corresponding vaccination history (for example, corona test, vaccination data) are stored in a record in the future.

Even in this case, it is conceivable that records of corona tests and vaccination of which the expiration date has expired become in a deactivated state (Deactivate), and only valid records are in an activated state (activate).

In this case, when what kind of test or inoculation has been performed in the past occurs to be checked, it is necessary to set records of all the tests of the infectious disease and corresponding vaccination history to an activated state (Activate). However, it becomes necessary to separately check which record of the test of the infectious disease and corresponding vaccination history is valid with reference to the expiration date data.

In any of the assumed cases, it is necessary to set all the data that does not originally need to be searched to an activated state (Activate), and thus, there is a possibility that the search time becomes longer than necessary.

Therefore, an object of the present embodiment is to enable an operator to quickly perform meaningful record search without being conscious of whether a record is in an activated state (Activate) or a deactivated state (Deactivate) without having to set all records to an activated state (Activate).

Next, data search processing will be described.

In the following description, the following premise is assumed to be satisfied for easy understanding.

(1) At least one EF in which at least one record is stored is present.
(2) The EF is in an activated state (Activate) or a deactivated state (Deactivate) as defined in ISO/IEC7816-4/-9.
(3) The record stored in the EF is in an activated state (Activate) or a deactivated state (Deactivate) described in ISO/IEC7816-4.

First, a search command used for data search processing will be described.

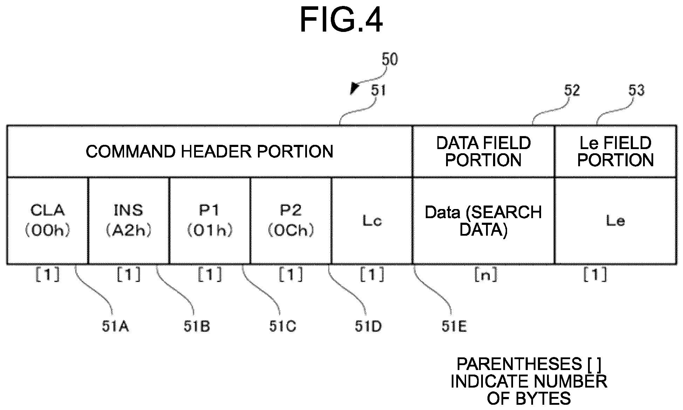

FIG. 4 is a data format of the search command.

A search command 50 includes a command header portion 51, a data field portion 52, and a Le field portion 53.

The command header portion 51 stores information for specifying data as a data search target.

The command header portion 51 includes a command class portion 51A, a command portion 51B, a first search parameter portion 51C, a second search parameter portion 51D, and data portion size data 51E.

The command class portion 51A stores a command class (CLA: class), and a data size (data length) thereof is 1 byte in the case of the example of FIG. 4.

The command portion 51B stores a command code (INS: instruction) and a data search command in the case of the example of FIG. 4, and a data size thereof is 1 byte in the case of the example of FIG. 4.

The first search parameter portion 51C stores a first command parameter P1 for specifying a data search target, and a data size thereof is 1 byte in the case of the example of FIG. 4.

The second search parameter portion 51D stores a second command parameter P2 for specifying a data search target, and a data size thereof is 1 byte in the case of the example of FIG. 4.

The data portion size data 51E stores an Lc field Lc for specifying a data size (data length) of the data field portion 52, and a data size thereof is 1 byte or 3 bytes, and is 1 byte in the case of the example of FIG. 4.

The data field portion 52 stores search data for specifying a search target, and a data size thereof is a size designated by the Lc field Lc of the data portion size data 51E, that is, n (n is a natural number) bytes in the case of the example of FIG. 4.

The Le field portion 53 stores data indicating the maximum number of bytes expected in a data field of a response to the search command 50, and a data size thereof is 1 byte or 2 bytes, and is 1 byte in the case of the example of FIG. 4.

More specifically, as specified in ISO/IEC7816-4, in the case of the example of FIG. 4, since CLA = 00h (h represents a 16 decimal number) in the command class portion 51A, it indicates that the command is the search command 50 classified as a user command specified in ISO/IEC7816-4.

In addition, in the command portion 51B, since INS = A2h, it indicates that it is a command to perform record search (Search Record).

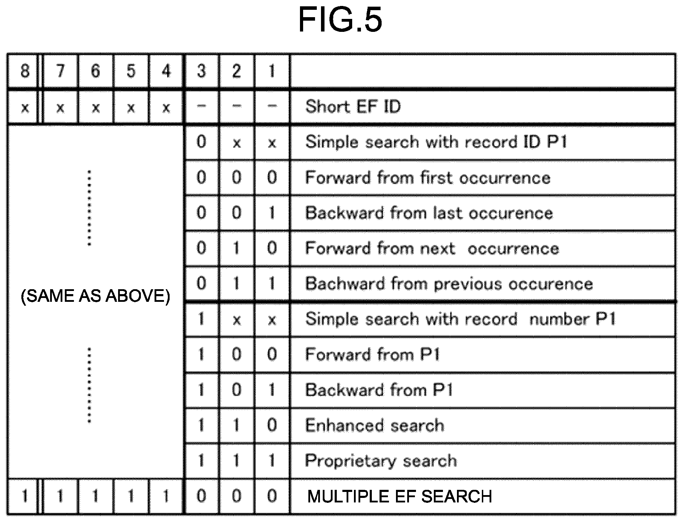

FIG. 5 is an explanatory diagram of a command parameter.

In addition, in the first search parameter portion 51C, since the first command parameter P1 = 01h, it indicates that the search is performed from the record #1.

In addition, in the second search parameter portion 51D, since the second command parameter P2 = 0Ch, as illustrated in FIG. 5, it indicates that the search is started from the record indicated by the first command parameter P1 of the EF (Forward from P1).

In this case, the search data stored in the data field portion 52 having the size indicated by the data portion size data 51E is searched.

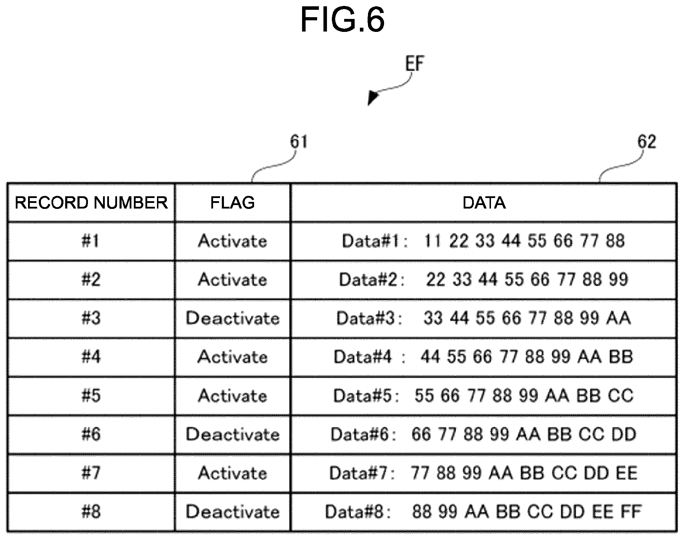

FIG. 6 is an explanatory diagram of an example of the EF as the search target.

As illustrated in FIG. 6, a flag 61 and data 62 are stored in the EF as the search target in association with the record number (actually, data storage address). Here, the flag 61 is actually 1 bit, but is denoted as "Activate" or "Deactivate" in FIG. 5 for easy understanding.

More specifically, in the data storage address of the record number = #1, data Data#1 = "11 22 33 44 55 66 77 88" of the flag 61 = "Activate" is stored, and the flag 61 = "Activate", which indicates that the data Data#1 is in an activated state and is valid data at that time.

Similarly, in the data storage address of the record number = #3, data Data#3 = "33 44 55 66 77 88 99 AA" of the flag 61 = "Deactivate" is stored, and the flag 61 = "Deactivate", which indicates that the data Data#1 is in a deactivated state and is invalid data at that time.

Next, an operation of the embodiment will be described.

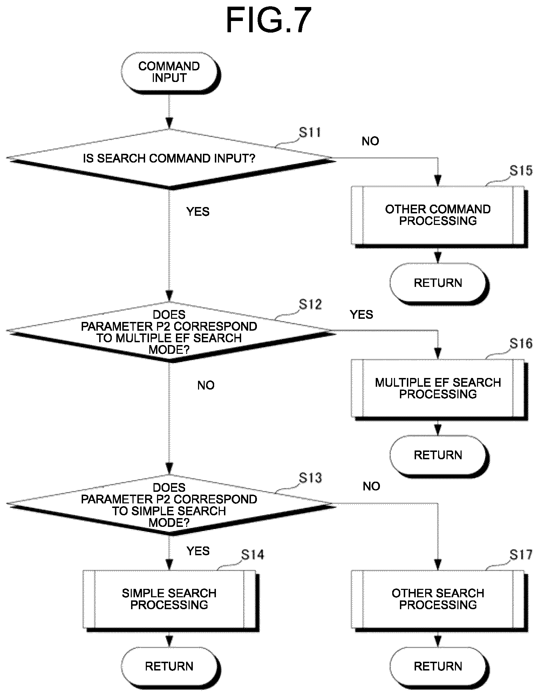

FIG. 7 is a main flowchart at the time of a command input of the portable electronic device according to the embodiment.

First, the communication/power receiving unit 32 of the portable electronic device 11 supplies the modulated wave from the reader/writer 12 received via the antenna 31 to the power supply unit 33 as a power signal.

As a result, the power supply unit 33 performs AC/DC conversion of the power signal, and supplies the power signal as an operation power supply PW1 of the communication/power receiving unit 32 and an operation power supply PW2 of the controller 34.

As a result, the MPU 34A of the controller 34 starts a normal operation.

Then, the MPU 34A determines whether or not the search command (search record command) 50 is input via the communication/power receiving unit 32 (Step S11).

In a case where it is determined in Step S11 that the search command 50 has not been input (Step S11; No), the MPU 34A shifts to other command processing (Step S15).

In a case where it is determined in Step S11 that the search command 50 has been input (Step S11; Yes), the MPU 34A determines whether or not the second command parameter P2 corresponds to a multiple EF search mode in which a plurality of EFs are targets (Step S12).

In a case where it is determined in Step S12 that the second command parameter P2 corresponds to the multiple EF search mode in which a plurality of EFs are targets (Step S12; Yes), the MPU 34A performs the multiple EF search processing to be described in detail later (Step S16).

In a case where it is determined in Step S12 that the second command parameter P2 does not correspond to the multiple EF search mode in which a plurality of EFs are targets (Step S12; No), the MPU 34A determines whether or not the second command parameter P2 corresponds to a simple search mode in which a single EF is a target (Step S13).

In a case where it is determined in Step S13 that the second command parameter P2 corresponds to the simple search mode in which a single EF is a target (Step S13; Yes), the MPU 34A performs the simple search processing to be described in detail later (Step S14).

In a case where it is determined in Step S13 that the second command parameter P2 does not correspond to a simple search mode in which a single EF is a target (Step S13; No), the MPU 34A executes other search processing as illustrated in FIG. 5 (Step S17).

Next, the simple search processing performed in Step S14 will be described in detail.

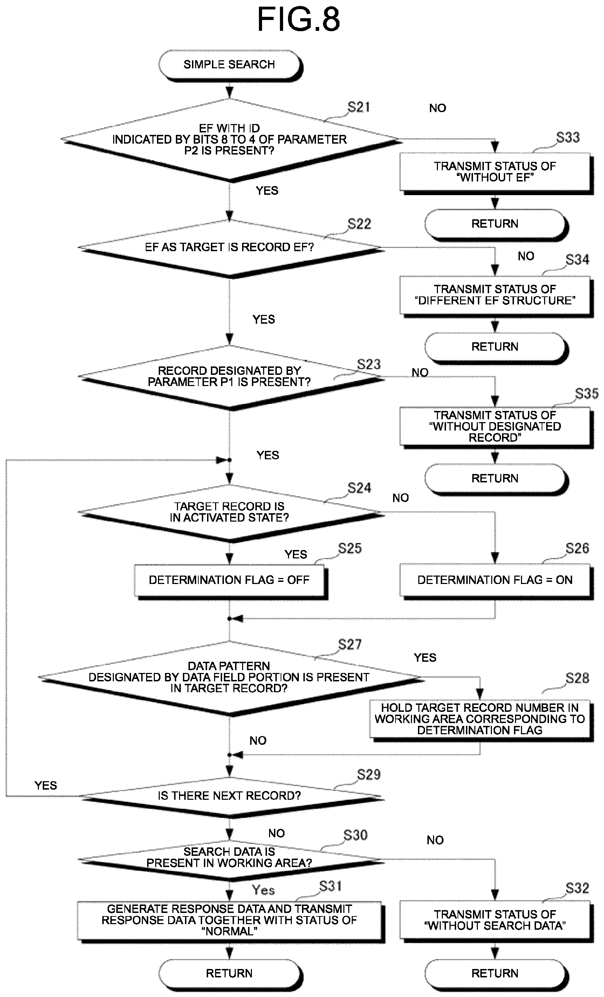

FIG. 8 is a processing flowchart of the simple search processing.

First, the MPU 34A determines whether or not an EF corresponding to an ID indicated by bits 8 to 4 (refer to FIG. 5) of the second command parameter P2 is present (Step S21).

In a case where it is determined in Step S21 that an EF corresponding to the ID indicated by bits 8 to 4 (refer to FIG. 5) of the second command parameter P2 is not present (Step S; No), the MPU 34A sets the status as "without EF", transmits the status to the information processing device 13 via the reader/writer 12, and ends the processing (Step S33).

In a case where it is determined in Step S21 that an EF corresponding to the ID indicated by bits 8 to 4 (refer to FIG. 5) of the second command parameter P2 is present (Step S21; Yes), the MPU 34A determines whether or not the EF as the search target is a record EF including a record (Step S22).

In a case where it is determined in Step S22 that the EF as the search target is not the record EF including the record (Step S22; No), the MPU 34A sets the status as "different EF structure", transmits the status to the information processing device 13 via the reader/writer 12, and ends the processing (Step S34).

In a case where it is determined in Step S22 that the EF as the search target is the record EF including the record (Step S22; Yes), the MPU 34A determines whether or not a record designated by the first command parameter P1 is present (Step S23).

In a case where it is determined in Step S23 that a record designated by the first command parameter P1 is not present (Step S23; No), the MPU 34A sets the status as "without designated record", transmits the status to the information processing device 13 via the reader/writer 12, and ends the processing (Step S35).

In a case where it is determined in Step S23 that a record designated by the first command parameter P1 is present (Step S23; Yes), the MPU 34A determines whether or not the target record as the designated record is in an activated state (Activate) (Step S24).

In a case where it is determined in Step S24 that the target record is in an activated state (Activate) (Step S24; Yes), the MPU 34A sets a determination flag indicating whether or not the record is in an activated state (Activate), to an OFF state (=0) corresponding to a case where the target record is in an activated state (Activate) (Step S25), and the processing proceeds to Step S27.

In a case where it is determined in Step S24 that the target record is in a deactivated state (Deactivate) (Step S24; No), the MPU 34A sets the determination flag indicating whether or not the record is in an activated state (Activate), to an ON state (=1) corresponding to a case where the target record is in a deactivated state (Deactivate) (Step S26).

Subsequently, the MPU 34A determines whether or not a data pattern designated by the data field portion 52 of the search command 50 is present in the target record (Step S27).

In a case where it is determined in Step S27 that the data pattern designated by the data field portion 52 of the search command 50 is present in the target record, the MPU 34A holds a number for specifying the target record in a working area corresponding to the determination flag, and the processing proceeds to Step S29.

More specifically, in a case where the data pattern designated by the data field portion 52 of the search command 50 is present in the target record and the determination flag is in the OFF state (=0), which corresponds to a case where the target record is in an activated state (Activate), the MPU 34A holds the target record number in the working area corresponding to the record in an activated state (Activate).

In addition, in a case where the data pattern designated by the data field portion 52 of the search command 50 is present in the target record and the determination flag is in the ON state (=1), which corresponds to a case where the target record is in a deactivated state (Deactivate), the MPU 34A holds the target record number in the working area corresponding to the record in a deactivated state (Deactivate).

Subsequently, the MPU 34A determines whether or not there is a next record as a processing target (Step S29).

In a case where it is determined in Step S29 that there is a next record as the processing target (Step S29; Yes), the MPU 34A causes the processing to return to Step S24 again and performs the above-described processing on the next record.

In a case where it is determined in Step S29 that there is no next record as the processing target (Step S29; No), the MPU 34A determines whether or not the search data (target record number) is held and is present in the working area described in Step S28 (Step S30).

In a case where it is determined in Step S30 that no search data (target record number) is held in the working area described in Step S28 (Step S30; No), the MPU 34A sets the status as "without search data", transmits the status to the information processing device 13 via the reader/writer 12, and ends the processing (Step S32).

In a case where it is determined in Step S30 that one or more pieces of search data (target record number) are held in the working area described in Step S28 (Step S30; Yes), response data is generated, the status is set as "normal", the response data is transmitted to the information processing device 13 via the reader/writer 12, and the processing is ended (Step S31).

Here, an example of the response data will be described again with reference to FIG. 6.

Hereinafter, a case where the data of the EF as the search target is as illustrated in FIG. 6 will be described as an example.

The response data also includes information indicating whether the target record is in an activated state (Activate) or the target record is in a deactivated state (Deactivate).

That is, as a format of the response data, for the search data in which the target record is in an activated state (Activate), the data length and the search data (target record number) are arranged following the tag Tag = "XX" indicating that the target record is in an activated state (Activate), further, the tag Tag = "YY" indicating that the target record is in a deactivated state (Deactivate) is added following the search data in which the target record is in an activated state (Activate), and the data length and the search data (target record number) are arranged following the tag Tag = "YY".

More specifically, referring to FIG. 6, in the case of the search data = "88", the search data = "88" is included in the record numbers = #1, 2, 4, 5, and 7 in total of five among the records in which the target record is in an activated state (Activate), and is included in the record numbers = #3, 6, and 8 in total of three among the records in which the target record is in a deactivated state (Deactivate).

Therefore, response data RP is as follows.

```
RP = "XX 05 01 02 04 05 07 YY 03 03 06 08 90 00"
```

Note that the last data "90 00" is a code indicating that the command has been normally ended (hereinafter, the same is applied).

In addition, referring to FIG. 6, in the case of the search data = "33 44 55", the search data is included in the record numbers = #1 and 2 in total of two among the records in which the target record is in an activated state (Activate), and is only included in the record number = #3 in total of one among the records in which the target record is in a deactivated state (Deactivate).

Therefore, response data RP is as follows.

```
RP = "XX 02 01 02 YY 01 03 90 00"
```

In addition, referring to FIG. 6, in the case of the search data = "EE FF", since the search data is not present in the record in which the target record is in an activated state (Activate), the total number is zero, and the search data is only included in the record number = #8 in total of one among the records in which the target record is in a deactivated state (Deactivate).

Therefore, response data RP is as follows.

```
RP = "XX 00 YY 01 08 90 00"
```

In addition, referring to FIG. 6, in the case of the search data = "11 22 33 44", the search data is only included in the record number = #1 in total of one among the records in which the target record is in an activated state (Activate), the search data is not present in the record in which the target record is in a deactivated state (Deactivate), and the total number is zero.

Therefore, response data RP is as follows.

```
RP = "XX 01 01 YY 00 90 00"
```

As described above, the data search can be performed in both the case where the target record is in an activated state (Activate) and the case where the target record is in a deactivated state (Deactivate), and the state of the target record can also be grasped, so that the data can be more easily used.

Next, the multiple EF search processing performed in Step S16 will be described in detail.

First, an example of a plurality of EFs will be described.

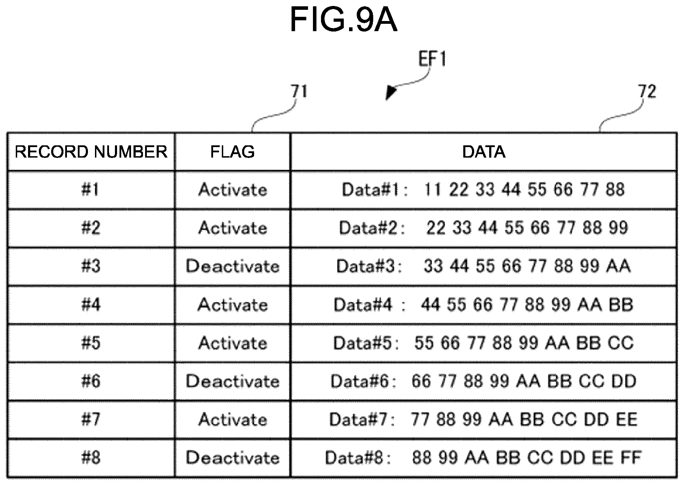

FIGS. 9A to 9C are explanatory diagrams of an example of a plurality of EFs.

Here, for easy understanding, a case where searching is performed from three EFs of EF1 as a first EF, EF2 as a second EF, and EF3 as a third EF as the plurality of EFs will be described. However, two or four or more EFs can be similarly applied.

For example, in the case of the data structure illustrated in FIG. 3, EF1 as the first EF corresponds to EF44-11, EF2 as the second EF corresponds to EF44-12, and EF3 as the third EF corresponds to EF44-13.

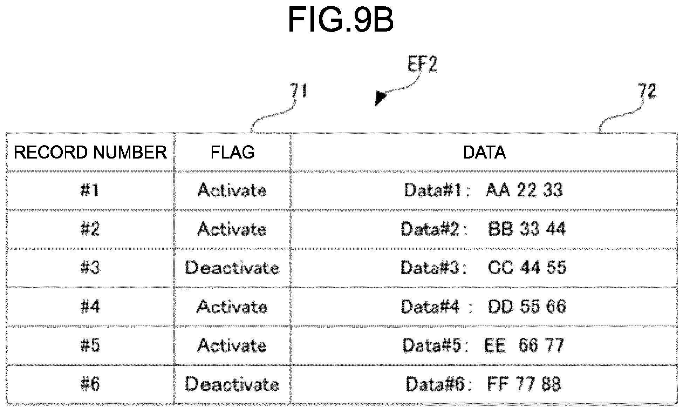

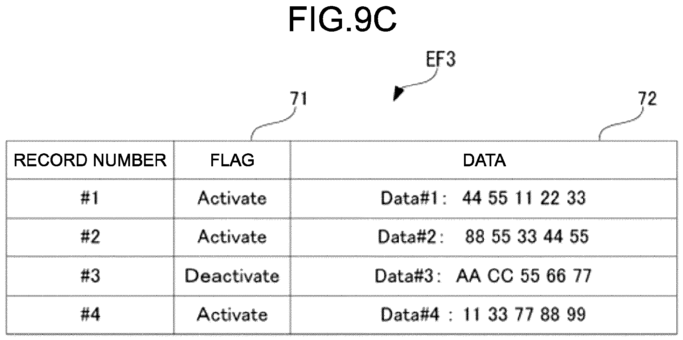

As illustrated in FIG. 9A, a flag 71 and data 72 are stored in the EF1, which is the first EF, as the search target in association with the record number (actually, data storage address). Here, the flag 71 is actually 1 bit, but is denoted as "Activate" or "Deactivate" in FIG. 9A for easy understanding. The same applies to FIGS. 9B and 9C.

More specifically, as illustrated in FIG. 9A, the EF1 as the first EF includes eight records, in the data storage address of the record number = #1, data Data#1 = "11 22 33 44 55 66 77 88" of the flag 71 = "Activate" is stored, and the flag 71 = "Activate", which indicates that the data Data#1 is in an activated state and is valid data at that time.

Similarly, in the data storage address of the record number = #3, data Data#3 = "33 44 55 66 77 88 99 AA" of the flag 71 = "Deactivate" is stored, and the flag 71 = "Deactivate", which indicates that the data Data#1 is in a deactivated state and is invalid data at that time.

Similarly, as illustrated in FIG. 9B, the flag 71 and the data 72 are stored in the EF2 as the second EF in association with the record number. Furthermore, the EF2 includes six records, in the data storage address of the record number = #1, data Data#1 = "AA 22 33" of the flag 71 = "Activate" is stored, and the flag 71 = "Activate", which indicates that the data Data#1 is in an activated state and is valid data at that time.

Similarly, in the data storage address of the record number = #3, data Data#3 = "CC 33 44" of the flag 71 = "Deactivate" is stored, and the flag 71 = "Deactivate", which indicates that the data Data#3 is in a deactivated state and is invalid data at that time.

Similarly, as illustrated in FIG. 9C, the flag 71 and the data 72 are stored in the EF3 as the third EF in association with the record number. Furthermore, the EF3 includes four records, in the data storage address of the record number = #1, data Data#1 = "44 55 11 22 33" of the flag 71 = "Activate" is stored, and the flag 71 = "Activate", which indicates that the data Data#1 is in an activated state and is valid data at that time.

Similarly, in the data storage address of the record number = #3, data Data#3 = "AA CC 55 66 77" of the flag 71 = "Deactivate" is stored, and the flag 71 = "Deactivate", which indicates that the data Data#3 is in a deactivated state and is invalid data at that time.

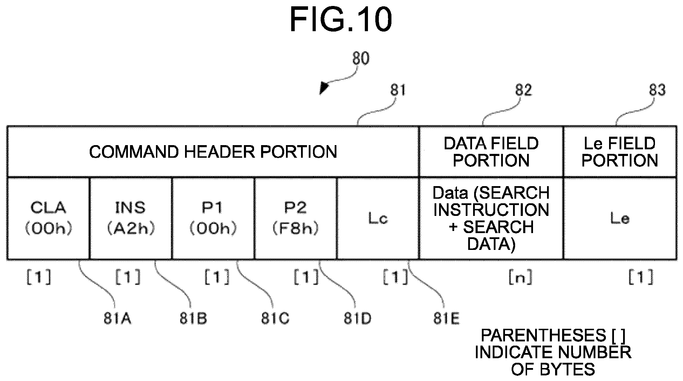

FIG. 10 is a data format of a search command used in the multiple EF search processing.

A search command 80 includes a command header portion 81, a data field portion 82, and a Le field portion 83.

The command header portion 81 stores information for specifying data as a data search target.

The command header portion 81 includes a command class portion 81A, a command portion 81B, a first search parameter portion 81C, a second search parameter portion 81D, and data portion size data 81E.

The command class portion 81A stores a command class (CLA: class), and a data size (data length) thereof is 1 byte in the case of the example of FIG. 10.

The command portion 81B stores a command code (INS: instruction) and a data search command in the case of the example of FIG. 10, and a data size thereof is 1 byte in case of the example of FIG. 10.

The first search parameter portion 81C stores the first command parameter P1 for specifying the data search target, but in the multiple EF search processing, the value thereof is fixed to 00h, and the data size thereof is 1 byte in the case of the example of FIG. 10.

The second search parameter portion 81D stores the second command parameter P2 for specifying the multiple EF search processing, and the value thereof is F8 (refer to the bottom line of FIG. 5). Note that the data size is 1 byte in the case of the example of FIG. 10.

The data portion size data 81E stores an Lc field Lc for specifying a data size (data length) of the data field portion 82, and a data size thereof is 1 byte or 3 bytes, and is 1 byte in the case of the example of FIG. 10.

The data field portion 82 stores a search instruction and search data for specifying a search target, and a data size thereof is a size designated by the Lc field Lc of the data portion size data 81E, that is, n (n is a natural number) bytes in the case of the example of FIG. 10.

The Le field portion 83 stores data indicating the maximum number of bytes expected in a data field of a response to the search command 50, and a data size thereof is 1 byte or 2 bytes, and is 1 byte in the case of the example of FIG. 10.

More specifically, as specified in ISO/IEC7816-4, also in the case of the example of FIG. 10, since CLA = 00h (h represents a 16 decimal number) in the command class portion 81A, it indicates that the command is the search command 80 classified as a user command specified in ISO/IEC7816-4.

In addition, in the command portion 81B, since INS = A2h, it indicates that it is a command to perform record search (Search Record).

Next, the multiple EF search processing will be described.

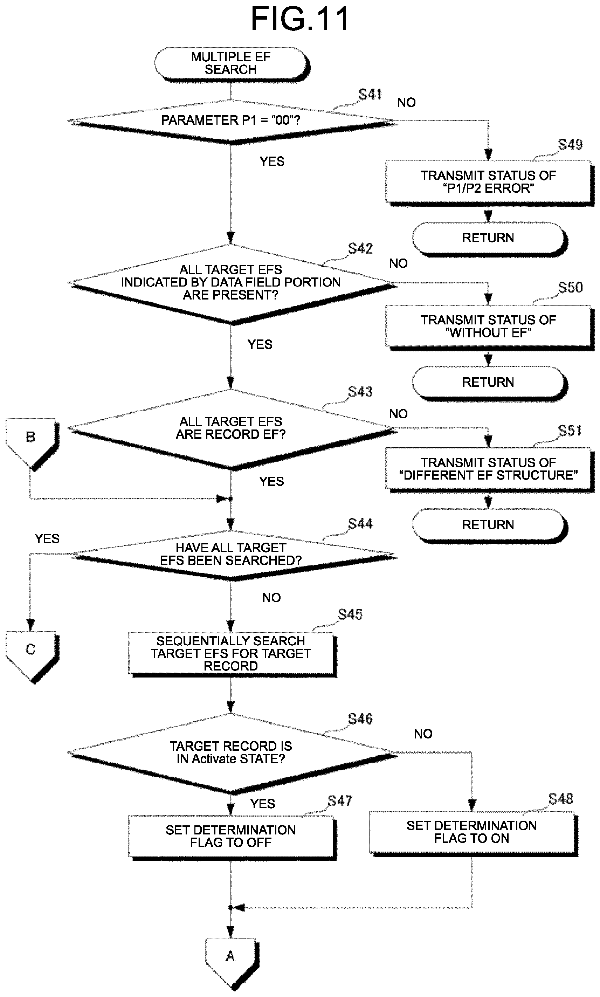

FIG. 11 is a processing flowchart (part 1) of the multiple EF search processing.

First, the MPU 34A determines whether or not the first command parameter P1 = "00", that is, whether or not an error of the first command parameter P1 or the second command parameter P2 has occurred (Step S41).

In a case where it is determined in Step S41 that the first command parameter P1 = "00" is not satisfied (Step S41; No), the MPU 34A sets the status as "an error of the first command parameter P1 or the second command parameter has occurred", transmits the status to the information processing device 13 via the reader/writer 12, and ends the processing (Step S49).

In a case where it is determined in Step S41 that the first command parameter P1= "00" is satisfied (Step S41; Yes), it is determined whether or not all the plurality of target EFs indicated by the data field portion 82 are present (Step S42).

In a case where it is determined in Step S42 that any one of the plurality of target EFs indicated by the data field portion 82 is not present (Step S42; No), the MPU 34A sets the status as "without EF", transmits the status to the information processing device 13 via the reader/writer 12, and ends the processing (Step S50).

In a case where it is determined in Step S42 that all of the plurality of target EFs indicated by the data field portion 82 are present (Step S42; Yes), the MPU 34A determines whether or not the plurality of EFs as the search target are the record EF including the record (Step S43).

In a case where it is determined in Step S43 that any one of the plurality of EFs as the search target is not the record EF including the record (Step S43; No), the MPU 34A sets the status as "different EF structure", transmits the status to the information processing device 13 via the reader/writer 12, and ends the processing (Step S51).

In a case where it is determined in Step S43 that all of the plurality of EFs as the search target are the record EF including the record (Step S43; Yes), the MPU 34A determines whether or not all of the plurality of target EFs have been searched (Step S44).

In a case where it is determined in Step S44 that the plurality of EFs as the target have not been searched (Step S44; No), the EFs as the target are sequentially searched for the target record (Step S45).

Next, it is determined whether or not the searched target record is in an activated state (Activate) (Step S46).

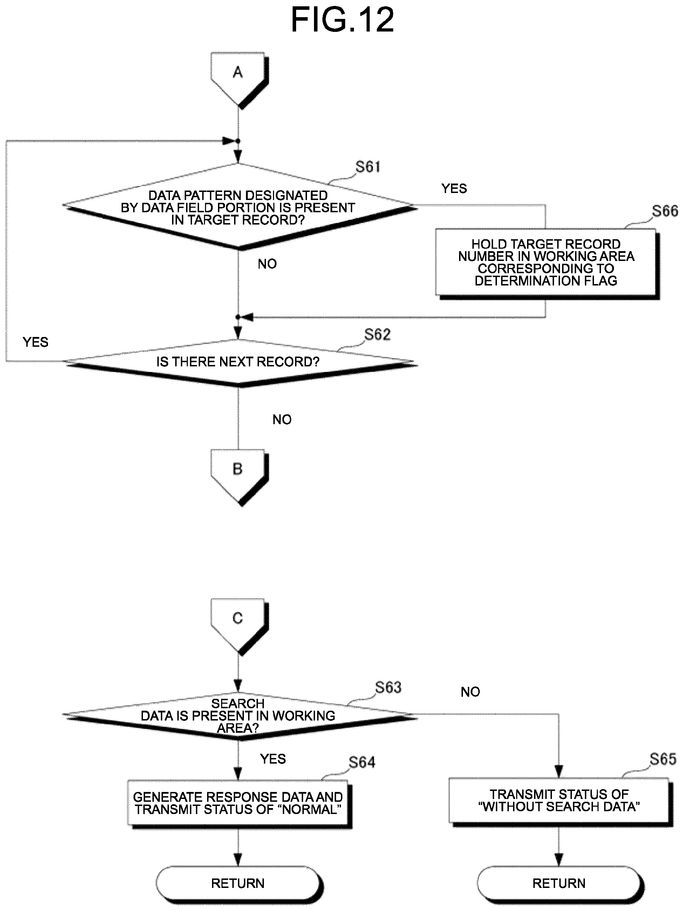

FIG. 12 is a processing flowchart (part 2) of the multiple EF search processing.

In a case where it is determined in Step S46 that the target record is in an activated state (Activate) (Step S46; Yes), the MPU 34A sets a determination flag indicating whether or not the record is in an activated state (Activate), to an OFF state (=0) corresponding to a case where the target record is in an activated state (Activate) (Step S47), and the processing proceeds to Step S61 (refer to FIG.12).

In a case where it is determined in Step S46 that the target record is in a deactivated state (Deactivate) (Step S46; No), the MPU 34A sets the determination flag indicating whether or not the record is in an activated state (Activate), to an ON state (=1) corresponding to a case where the target record is in a deactivated state (Deactivate) (Step S48).

Subsequently, the MPU 34A determines whether or not a data pattern designated by the data field portion 82 of the search command 80 is present in the target record (Step S61).

In a case where it is determined in Step S61 that the data pattern designated by the data field portion 82 of the search command 80 is present in the target record, the MPU 34A holds a number for specifying the target record in a working area corresponding to the determination flag (Step S66), and the processing proceeds to Step S62.

More specifically, in a case where the data pattern designated by the data field portion 82 of the search command 80 is present in the target record and the determination flag is in the OFF state (=0), which corresponds to a case where the target record is in an activated state (Activate), the MPU 34A holds the target record number in the working area corresponding to the record in an activated state (Activate).

In addition, in a case where the data pattern designated by the data field portion 82 of the search command 80 is present in the target record and the determination flag is in the ON state (=1), which corresponds to a case where the target record is in a deactivated state (Deactivate), the MPU 34A holds the target record number in the working area corresponding to the record in a deactivated state (Deactivate).

In a case where it is determined in Step S61 that the data pattern designated by the data field portion 82 of the search command 80 is not present in the target record (Step S62; No), the MPU 34A determines whether or not there is a next record as the processing target (Step S62).

In a case where it is determined in Step S62 that there is a next record as the processing target (Step S62; Yes), the MPU 34A causes the processing to return to Step S61 again and performs the above-described processing on the next record.

In a case where it is determined in Step S62 that there is no next record as the processing target (Step S62; No), the processing returns to Step S44 again and the above-described processing is performed on the next record.

On the other hand, in a case where it is determined in Step S44 that all of the plurality of EFs as the target have been searched (Step S44; Yes), the MPU 34A determines whether or not the search data (target record number) is held and is present in the working area described in Step S66 (Step S63).

In a case where it is determined in Step S63 that no search data (target record number) is held in the working area described in Step S67 (Step S63; No), the MPU 34A sets the status as "without search data", transmits the status to the information processing device 13 via the reader/writer 12, and ends the processing (Step S65).

In a case where it is determined in Step S63 that one or more pieces of search data (target record number) are held in the working area described in Step S67 (Step S63; Yes), response data is generated, the status is set as "normal" and is transmitted to the information processing device 13 via the reader/writer 12, and the processing is ended (Step S64).

Here, an example of the response data will be described again with reference to FIGS. 9A to 9C.

Hereinafter, a case where the data of the EF as the search target is as illustrated in FIGS. 9A to 9C will be described as an example.

The response data also includes information indicating whether the target record is in an activated state (Activate) or the target record is in a deactivated state (Deactivate).

That is, as a format of the response data, for the search data in which the target record is in an activated state (Activate), the data length, Tag = "MM" representing information specifying the EF in which the target record is stored, Tag = "NN" representing the search record number, and the search data (target record number) are arranged following the tag Tag = "XX" indicating that the target record is in an activated state (Activate). Furthermore, as a format of the response data, the tag Tag = "YY" indicating that the target record is in a deactivated state (Deactivate) is added following the search data in which the target record is in an activated state (Activate), and a data length, Tag= "MM" representing information specifying the EF in which the target record is stored, Tag= "NN" representing a search record number, and the search data (target record number) are arranged following the tag Tag = "YY".

More specifically, referring to FIG. 9A, in the case of the search data = "44 55", in the EF1, the search data = "44 55" is included in the record numbers = #1, 2, and 4 in total of three among the records in which the target record is in an activated state (Activate).

In addition, referring to FIG. 9B, EF2 does not include any one.

In addition, referring to FIG. 9C, the search data is included in the record number = #2 in total of one among the records in which the target record is in an activated state (Activate).

In addition, referring to FIG. 9A, in the EF1, the search data is included in the record number = #3 in total of one among the records in which the target record is in a deactivated state (Deactivate).

In addition, referring to FIG. 9B, in the EF2, the search data is included in the record number = #3 in total of one among the records in which the target record is in a deactivated state (Deactivate).

Therefore, response data RP is as follows.

```
RP = "XX 0A MM 01 01 NN 03 01 02 04 MM 01 03 NN 01 02
      YY 07 MM 01 01 NN    01 03 MM 01 02    NN 01 03"
```

As described above, according to the present embodiment, since the record in a deactivated state can be included in the search target, even in a case where the record as the search target is in a deactivated state, the data search can be performed similarly to the case of the activated state, it is possible to easily ascertain whether or not the obtained data search result is included in the record in an activated state or in the record in a deactivated state, and it is possible to effectively use the search result.

The portable electronic device of the present embodiment has a hardware configuration using a control device such as an MPU, a storage device such as a read only memory (ROM) and a RAM, and a normal computer.

A program executed by the portable electronic device according to the present embodiment is provided as a file in an installable format or an executable format recorded on a computer-readable recording medium such as a USB memory, a semiconductor memory device such as a solid state drive (SSD), or a digital versatile disk (DVD).

In addition, the program executed by the portable electronic device of the present embodiment may be stored on a computer connected to a network such as the Internet and provided by being downloaded via the network. In addition, the program executed by the portable electronic device of the present embodiment may be provided or distributed via a network such as the Internet.

In addition, the program of the portable electronic device of the present embodiment may be provided by being incorporated in a ROM or the like in advance.

The program executed by the portable electronic device according to the present embodiment has a module configuration including the above-described units (search unit, search result output unit), and as actual hardware, the MPU (processor) reads and executes a program from a storage medium, so that the above-described units are loaded on the main storage device, and the search unit and the search result output unit are generated on the main storage device.

Although some embodiments of the present invention have been described, these embodiments have been presented as examples, and are not intended to limit the scope of the invention. These novel embodiments can be implemented in various other forms, and various omissions, substitutions, and changes can be made without departing from the gist of the invention. These embodiments and modifications thereof are included in the scope and gist of the invention, and are included in the invention described in the claims and the equivalent scope thereof.

In the above description, as the search target, the record in an activated state (Activate) and the record in a deactivated state (Deactivate) are set as the search result, but it is also possible to set only one of the record in an activated state (Activate) and the record in a deactivated state (Deactivate) as the search target by the search command by setting the command parameter.

In the above description, the record in a deactivated state (Deactivate) is used as the search target without limitation. However, it is also possible to store the time for which the record is in a deactivated state (Deactivate) and impose a temporal limitation.

**Claims**

1.  A portable electronic device comprising:

    a storage unit configured to be able to store a record in an activated state (Activate) and a record in a deactivated state (Deactivate);
    a search unit configured to search for, based on a search command input from an external device, a record corresponding to the search command from the records stored in the storage unit by including the record in the deactivated state (Deactivate) in a search target; and
    a search result output unit configured to output a search result corresponding to the record searched by the search unit to the external device.

2.  The portable electronic device according to claim 1, wherein
    the search result output unit is configured to output a search result corresponding to the record in the activated state (Activate) and a search result corresponding to the record in the deactivated state (Deactivate) as search results in a distinguishable manner.

3.  The portable electronic device according to claim 1, wherein
    the search command includes, as a parameter, identification information for designating at least one of the record in the activated state (Activate) and the record in the deactivated state (Deactivate) as the search target.

4.  The portable electronic device according to claim 1, wherein
    the search command is capable of designating one file or a plurality of files including the record, as a parameter.

5.  A control method for a portable electronic device for controlling the portable electronic device including a storage unit configured to be able to store a record in an activated state (Activate) and a record in a deactivated state (Deactivate), the method comprising:

    searching for, based on a search command input from an external device, a record corresponding to the search command from the records stored in the storage unit by including the record in the deactivated state (Deactivate) in a search target; and
    outputting a search result corresponding to the record searched in the searching to the external device.

6.  The control method for a portable electronic device according to claim 5, wherein
    the outputting the search result to the external device includes outputting a search result corresponding to the record in the activated state (Activate) and a search result corresponding to the record in the deactivated state (Deactivate) as search results in a distinguishable manner.

7.  The control method for a portable electronic device according to claim 5, wherein
    the search command includes, as a parameter, identification information for designating at least one of the record in the activated state (Activate) and the record in the deactivated state (Deactivate) as the search target.

8.  The control method for a portable electronic device according to claim 5, wherein
    the search command is capable of designating one file or a plurality of files including the record, as a parameter.

9. A computer-readable recording medium of recording a program for causing a computer to control a portable electronic device including a storage unit configured to be able to store a record in an activated state (Activate) and a record in a deactivated state (Deactivate), the program causing the computer to function as:

means for searching for, based on a search command input from an external device, a record corresponding to the search command from the records stored in the storage unit by including the record in the deactivated state (Deactivate) in a search target; and
means for outputting a search result corresponding to the record searched by the means for searching to the external device.

10. The recording medium according to claim 9, wherein
the means for outputting the search result to the external device outputs a search result corresponding to the record in the activated state (Activate) and a search result corresponding to the record in the deactivated state (Deactivate) as search results in a distinguishable manner.

# FIG.1

# FIG.2

31

11

34

32

34A

34B

COMMUNICA-
TION/POWER
RECEIVING
UNIT

MPU

EEPROM

34C

PW1

RAM

33

PW2

34D

POWER
SUPPLY UNIT

ROM

# FIG.3

# FIG.4

50

51

52    53

| COMMAND HEADER PORTION | | | | | DATA FIELD PORTION | Le FIELD PORTION |
|---|---|---|---|---|---|---|
| CLA (00h) | INS (A2h) | P1 (01h) | P2 (0Ch) | Lc | Data (SEARCH DATA) | Le |
| [1] | [1] | [1] | [1] | [1] | [n] | [1] |

51A    51B    51C    51D    51E

PARENTHESES [ ]
INDICATE NUMBER
OF BYTES

# FIG.5

| 8 | 7 | 6 | 5 | 4 | 3 | 2 | 1 | |
|---|---|---|---|---|---|---|---|---|
| x | x | x | x | x | – | – | – | Short EF ID |
| (SAME AS ABOVE) | | | | | 0 | x | x | Simple search with record ID P1 |
| | | | | | 0 | 0 | 0 | Forward from first occurrence |
| | | | | | 0 | 0 | 1 | Backward from last occurence |
| | | | | | 0 | 1 | 0 | Forward from next occurrence |
| | | | | | 0 | 1 | 1 | Bachward from previous occurence |
| | | | | | 1 | x | x | Simple search with record number P1 |
| | | | | | 1 | 0 | 0 | Forward from P1 |
| | | | | | 1 | 0 | 1 | Backward from P1 |
| | | | | | 1 | 1 | 0 | Enhanced search |
| | | | | | 1 | 1 | 1 | Proprietary search |
| 1 | 1 | 1 | 1 | 1 | 0 | 0 | 0 | MULTIPLE EF SEARCH |

# FIG.6

EF

| RECORD NUMBER | FLAG | DATA |
|---|---|---|
| #1 | Activate | Data#1: 11 22 33 44 55 66 77 88 |
| #2 | Activate | Data#2: 22 33 44 55 66 77 88 99 |
| #3 | Deactivate | Data#3: 33 44 55 66 77 88 99 AA |
| #4 | Activate | Data#4: 44 55 66 77 88 99 AA BB |
| #5 | Activate | Data#5: 55 66 77 88 99 AA BB CC |
| #6 | Deactivate | Data#6: 66 77 88 99 AA BB CC DD |
| #7 | Activate | Data#7: 77 88 99 AA BB CC DD EE |
| #8 | Deactivate | Data#8: 88 99 AA BB CC DD EE FF |

61    62

# FIG.7

```
                    ┌─────────────┐
                    │   COMMAND   │
                    │    INPUT    │
                    └─────────────┘
                           │
                           ▼
                                            S11        NO
         ◇ IS SEARCH COMMAND INPUT? ◇──────────────────────┐
                           │                                │
                           │ YES                            ▼        S15
                           │                      ┌─────────────────────┐
                           │                      │   OTHER COMMAND      │
                           │                      │    PROCESSING        │
                           │                      └─────────────────────┘
                           │                                │
                           │                                ▼
                           │                           ┌─────────┐
                           │                           │ RETURN  │
                           │                           └─────────┘
                           ▼
                      DOES              S12       YES
         ◇ PARAMETER P2 CORRESPOND ◇────────────────────────┐
           TO MULTIPLE EF SEARCH                            │
                  MODE?                                      ▼        S16
                           │                      ┌─────────────────────┐
                           │ NO                   │ MULTIPLE EF SEARCH   │
                           │                      │    PROCESSING        │
                           │                      └─────────────────────┘
                           │                                │
                           │                                ▼
                           │                           ┌─────────┐
                           │                           │ RETURN  │
                           │                           └─────────┘
                           ▼
                      DOES              S13       NO
         ◇ PARAMETER P2 CORRESPOND ◇────────────────────────┐
            TO SIMPLE SEARCH                                 │
                  MODE?                                      │
                           │                                 │
                    YES    │   S14                           │           S17
          ┌─────────────────────┐                 ┌─────────────────────┐
          │   SIMPLE SEARCH      │                 │   OTHER SEARCH       │
          │    PROCESSING        │                 │    PROCESSING        │
          └─────────────────────┘                 └─────────────────────┘
                    │                                        │
                    ▼                                        ▼
               ┌─────────┐                              ┌─────────┐
               │ RETURN  │                              │ RETURN  │
               └─────────┘                              └─────────┘
```

# FIG.8

```
              ┌─────────────────┐
              │  SIMPLE SEARCH  │
              └─────────────────┘
                       │
```

**S21**   **NO**

EF WITH ID INDICATED BY BITS 8 TO 4 OF PARAMETER P2 IS PRESENT?

**YES**

**S33**

TRANSMIT STATUS OF "WITHOUT EF"

RETURN

**S22**

EF AS TARGET IS RECORD EF?

**NO**

**YES**

**S34**

TRANSMIT STATUS OF "DIFFERENT EF STRUCTURE"

RETURN

**S23**   **NO**

RECORD DESIGNATED BY PARAMETER P1 IS PRESENT?

**YES**

**S35**

TRANSMIT STATUS OF "WITHOUT DESIGNATED RECORD"

RETURN

**S24**   **NO**

TARGET RECORD IS IN ACTIVATED STATE?

**YES**   **S25**

DETERMINATION FLAG = OFF

**S26**

DETERMINATION FLAG = ON

**S27**   **YES**

DATA PATTERN DESIGNATED BY DATA FIELD PORTION IS PRESENT IN TARGET RECORD?

**S28**

HOLD TARGET RECORD NUMBER IN WORKING AREA CORRESPONDING TO DETERMINATION FLAG

**NO**

**S29**

**YES**   IS THERE NEXT RECORD?

**NO**   **S30**   **NO**

SEARCH DATA IS PRESENT IN WORKING AREA?

**Yes**   **S31**

GENERATE RESPONSE DATA AND TRANSMIT RESPONSE DATA TOGETHER WITH STATUS OF "NORMAL"

RETURN

**S32**

TRANSMIT STATUS OF "WITHOUT SEARCH DATA"

RETURN

# FIG.9A

EF1

71　　　　　　　　　　　　　　　　　　　　　72

| RECORD NUMBER | FLAG | DATA |
|---|---|---|
| #1 | Activate | Data#1:　11 22 33 44 55 66 77 88 |
| #2 | Activate | Data#2:　22 33 44 55 66 77 88 99 |
| #3 | Deactivate | Data#3:　33 44 55 66 77 88 99 AA |
| #4 | Activate | Data#4 :　44 55 66 77 88 99 AA BB |
| #5 | Activate | Data#5:　55 66 77 88 99 AA BB CC |
| #6 | Deactivate | Data#6:　66 77 88 99 AA BB CC DD |
| #7 | Activate | Data#7:　77 88 99 AA BB CC DD EE |
| #8 | Deactivate | Data#8:　88 99 AA BB CC DD EE FF |

# FIG.9B

EF2

71

72

| RECORD NUMBER | FLAG | DATA |
|---|---|---|
| #1 | Activate | Data#1: AA 22 33 |
| #2 | Activate | Data#2: BB 33 44 |
| #3 | Deactivate | Data#3: CC 44 55 |
| #4 | Activate | Data#4: DD 55 66 |
| #5 | Activate | Data#5: EE 66 77 |
| #6 | Deactivate | Data#6: FF 77 88 |

# FIG.9C

EF3

71

72

| RECORD NUMBER | FLAG | DATA |
|---|---|---|
| #1 | Activate | Data#1:  44 55 11 22 33 |
| #2 | Activate | Data#2:  88 55 33 44 55 |
| #3 | Deactivate | Data#3:  AA CC 55 66 77 |
| #4 | Activate | Data#4 : 11 33 77 88 99 |

# FIG.10

80

81                    82            83

| COMMAND HEADER PORTION | | | | | DATA FIELD PORTION | Le FIELD PORTION |
|---|---|---|---|---|---|---|
| CLA (00h) | INS (A2h) | P1 (00h) | P2 (F8h) | Lc | Data (SEARCH INSTRUCTION + SEARCH DATA) | Le |
| [1] | [1] | [1] | [1] | [1] | [n] | [1] |

81A  81B  81C  81D  81E

PARENTHESES [ ] INDICATE NUMBER OF BYTES

# FIG.11

Flowchart: MULTIPLE EF SEARCH

- S41 — PARAMETER P1 = "00"?
  - NO → S49 — TRANSMIT STATUS OF "P1/P2 ERROR" → RETURN
  - YES ↓
- S42 — ALL TARGET EFS INDICATED BY DATA FIELD PORTION ARE PRESENT?
  - NO → S50 — TRANSMIT STATUS OF "WITHOUT EF" → RETURN
  - YES ↓
- S43 — ALL TARGET EFS ARE RECORD EF?
  - NO → S51 — TRANSMIT STATUS OF "DIFFERENT EF STRUCTURE" → RETURN
  - YES ↓ (B)
- S44 — HAVE ALL TARGET EFS BEEN SEARCHED?
  - YES → C
  - NO ↓
- S45 — SEQUENTIALLY SEARCH TARGET EFS FOR TARGET RECORD
- S46 — TARGET RECORD IS IN Activate STATE?
  - YES → S47 — SET DETERMINATION FLAG TO OFF
  - NO → S48 — SET DETERMINATION FLAG TO ON
- → A

# FIG.12

A

S61
DATA PATTERN DESIGNATED
BY DATA FIELD PORTION IS PRESENT
IN TARGET RECORD?

YES → S66
HOLD TARGET RECORD
NUMBER IN WORKING AREA
CORRESPONDING TO
DETERMINATION FLAG

NO

S62
IS THERE NEXT RECORD?

YES

NO

B

C

S63
SEARCH
DATA IS PRESENT IN WORKING
AREA?

NO → S65
TRANSMIT STATUS OF
"WITHOUT SEARCH DATA"

YES → S64
GENERATE RESPONSE DATA AND
TRANSMIT STATUS OF "NORMAL"

RETURN

RETURN

## INTERNATIONAL SEARCH REPORT

| International application No. |
| --- |
| **PCT/JP2023/029931** |

| A. | CLASSIFICATION OF SUBJECT MATTER |
| --- | --- |

*G06K 19/07*(2006.01)i; *G06F 16/11*(2019.01)i; *G06K 7/10*(2006.01)i
FI:　G06K7/10 216; G06F16/11; G06K19/07 230

According to International Patent Classification (IPC) or to both national classification and IPC

| B. | FIELDS SEARCHED |
| --- | --- |

Minimum documentation searched (classification system followed by classification symbols)

　　G06K19/07; G06F16/11; G06K7/10

Documentation searched other than minimum documentation to the extent that such documents are included in the fields searched

　　　Published examined utility model applications of Japan 1922-1996
　　　Published unexamined utility model applications of Japan 1971-2023
　　　Registered utility model specifications of Japan 1996-2023
　　　Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2012-194698 A (TOSHIBA CORP.) 11 October 2012 (2012-10-11) claims 1-10, paragraphs [0011]-[0114], fig. 1-11 | 1-10 |
| A | JP 2005-011171 A (DAINIPPON PRINTING CO., LTD.) 13 January 2005 (2005-01-13) paragraphs [0001]-[0067], fig. 1-13 | 1-10 |
| A | JP 2010-267028 A (BROTHER IND., LTD.) 25 November 2010 (2010-11-25) abstract, paragraphs [0028]-[0156], fig. 1-10 | 1-10 |
| A | JP 2013-156742 A (TOSHIBA CORP.) 15 August 2013 (2013-08-15) paragraphs [0011]-[0044], fig. 1-9F | 1-10 |
| A | JP 6-309527 A (MATSUSHITA ELECTRIC IND. CO., LTD.) 04 November 1994 (1994-11-04) paragraphs [0019]-[0021], fig. 4 | 1-10 |
| A | JP 2018-032163 A (TOSHIBA CORP.) 01 March 2018 (2018-03-01) paragraphs [0071]-[0073], fig. 14 | 1-10 |

☐ Further documents are listed in the continuation of Box C. ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 October 2023** | **31 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

EP 4 592 891 A1

## INTERNATIONAL SEARCH REPORT
### Information on patent family members

International application No.

**PCT/JP2023/029931**

| Patent document cited in search report | | | Publication date (day/month/year) | Patent family member(s) | Publication date (day/month/year) |
|---|---|---|---|---|---|
| JP | 2012-194698 | A | 11 October 2012 | (Family: none) | |
| JP | 2005-011171 | A | 13 January 2005 | (Family: none) | |
| JP | 2010-267028 | A | 25 November 2010 | US 2010/0293152 A1 abstract, paragraphs [0020]-[0138], fig. 1-10 | |
| JP | 2013-156742 | A | 15 August 2013 | (Family: none) | |
| JP | 6-309527 | A | 04 November 1994 | (Family: none) | |
| JP | 2018-032163 | A | 01 March 2018 | (Family: none) | |

Form PCT/ISA/210 (patent family annex) (January 2015)

**EP 4 592 891 A1**

## REFERENCES CITED IN THE DESCRIPTION

**Patent documents cited in the description**

- JP 2006072924 A